(19) Europäisches Patentamt
European Patent Office
Office européen des brevets

(11) Publication number: 0 181 482 B1

(12) EUROPEAN PATENT SPECIFICATION

(45) Date of publication of patent specification: 11.01.89

(51) Int. Cl.[4]: C 08 F 210/02, H 01 B 3/44

(21) Application number: 85112531.0

(22) Date of filing: 03.10.85

# (54) Novel ethylene copolymers.

(30) Priority: 03.10.84 JP 207595/84

(43) Date of publication of application: 21.05.86 Bulletin 86/21

(45) Publication of the grant of the patent: 11.01.89 Bulletin 89/02

(84) Designated Contracting States: DE FR GB

(56) References cited:
GB-A-1 077 349
US-A-3 954 907

CHEMICAL ABSTRACTS, vol. 68, 1968, page 4891, abstract no. 50321e, Columbus, Ohio, US; & JP - A - 67 14 449 (J. FURUKAWA et al.) 14.08.1967

(73) Proprietor: Nippon Petrochemicals Co., Ltd.
Saiwai Building, 1-3-1 Uchisaiwai-cho Chiyoda-ku
Tokyo (JP)

(72) Inventor: Orikasa, Yuichi
3-35-2, Ohkubo Konan-ku
Yokohama-shi Kanagawa-ken (JP)
Inventor: Kojima, Shinji
3-35-4, Ohkubo Konan-ku
Yokohama-shi Kanagawa-ken (JP)
Inventor: Inoue, Takashi
29-330, Nagahama Kanazawa-ku
Yokohama-shi Kanagawa-ken (JP)
Inventor: Yamamoto, Kaoru
4-4-7, Tamagawa Sedagaya-ku
Tokyo (JP)
Inventor: Sato, Atsushi
2-15-23, Yagumo Meguro-ku
Tokyo (JP)
Inventor: Kawakami, Shigenobu
1-15-10, Yahata
Ichikawa-shi Chiba-ken (JP)

(74) Representative: Strehl, Schübel-Hopf, Groening, Schulz
Widenmayerstrasse 17 Postfach 22 03 45
D-8000 München 22 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 181 482 B1

Courier Press, Leamington Spa, England.

**Description**

Background of the Invention

*(1) Field of the Invention*

The present invention relates to ethylene copolymers. More specifically, it relates to ethylene copolymers useful for electrical insulating materials, foamed materials, modification of polymers such as engineering plastics, and the like.

*(2) Description of the Prior Art*

Olefin polymers, especially, ethylene polymers and propylene polymers are excellent in various properties such as mechanical properties, workability and electrical properties, and are inexpensive and thus economical. Consequently, they are utilized as raw materials for electrical insulating materials and foamed materials, or as finished products such as films, pipes and containers in a variety of fields.

Further, there are well known olefin copolymers in which functional groups are introduced into the above-mentioned olefin polymers in order to improve their properties.

For example, polyethylene itself is also small in dielectric loss and has a high insulating power, and when crosslinked so as to remarkably improve its thermal resistance, it is employed as a good insulating material. However, for the purpose of utilizing polyethylenes as insulating materials for high-voltage cables and high-voltage equipments, a more improved and higher performance is desired for the polyethylenes.

Attempts have been made to improve the insulating power, and a method has been suggested in which an aromatic ring is introduced into an ethylene polymer.

For example,

(1) A method in which an aromatic polymer such as a polystyrene is mixed with a polyethylene or an olefin polymer (JP—B—20717/1963, and JP—A—142651/1975 and 54187/1977).

(2) A method in which a polyethylene is mixed with a block copolymer of styrene and a conjugated diene (JP—A—41884/1975).

(3) A method in which a graft polymerization is carried out between a polyethylene and styrene (JP—B—18760/1979).

(4) A method in which a polyethylene is impregnated with an electrical insulating oil (JP—A—33938/1974).

However, even according to any method just described, a sufficient improvement of the insulating power cannot be accomplished. In addition thereto, as for the method of the paragraph (1) mentioned above, the miscibility of the polyethylene or the polyolefin and the styrene polymer is poor, and in the method of the paragraph (2) above, thermal resistance and extrusion workability are bad. In the case of the method described in the paragraph (3), the previously crosslinked polyethylene is graft-polymerized with styrene in order to improve destructive strength to impulse voltage in a high-temperature range of the polyethylene. In consequence, intricate equipments and processes are required, and there exists a drawback that the destructive strength to the impulse voltage in the low-temperature range is poorer than that of an untreated raw polyethylene. With regard to the method of the paragraph (4), the kneaded electrical insulating oil will bleed out, when the polyethylene is used for a long period of time, or when the environment is changed, so that functional effects of the polyethylene will be poorer than by any other method. Accordingly, any method is unsatisfactory, and thus the insulating materials are now demanded which are stable for a long period of time and which have a more excellent performance.

On the other hand, speaking of the field of foamed materials, the foamed polyethylene materials advantageously have a high elasticity and good strain recovery properties against repeated stress, but foam molding in a mold only permits manufacturing of products having simple shapes. Further, in the case of bead foam molding (which is a molding method by using preliminary foamed grains and carying out the foam molding with the aid of steam heating) which enables the production of foamed materials having complicated shapes, the diffusion of a gas at the foaming step is too fast and thus the decision of molding conditions is difficult, for which reason, the bead foam molding is not utilized prevalently.

It can also be presumed that a polystyrene suitable for the bead foam molding is blended with polyethylene grains which have been preliminarily foamed by adding a foaming agent thereto before the foam molding in a mold, but in such a molding method, fusing adhesion between different kinds of beads is bad, and thus practicable foamed articles cannot be manufactured.

In recent years, some methods for preparing foamed polyethylene beads have been suggested by which the above-mentioned drawbacks can be eliminated, the release of a used foaming agent can be prevented, and foamed materials having a high magnifying power can be prepared.

For example,

(1) A method comprising the steps of dispersing polyethylene grains, a styrene monomer and a polymerization catalyst into an aqueous medium, forcedly adding thereto a gaseous or liquid physical foaming agent in ordinary state, and carrying out a suspension polymerisation of the styrene monomer under heating and pressurizing in order to prepare foamed and modified polyethylene grains (JP—B—2469/1969, 32622/1970 and 32623/1970).

(2) A method comprising the steps of dispersing polyethylene grains, a styrene monomer and a polymerization catalyst into an aqueous medium, carrying out suspension polymerization under heating

and pressurizing in order to prepare styrene-modified polyethylene grains, and adding a physical foaming agent to the prepared grains (JP—B—10150/1977 and JP—A—85187/1974 and 97884/1974).

(3) A method comprising the steps of carrying out a graft polymerization of a polyolefin resin with styrene under the irradiation of ionized radiation, and adding thereto a foaming agent in order to prepare a porous material (JP—B—19382/1969).

In addition to these mentioned methods, many techniques have been suggested, but all of them require complicated processes and equipments.

As a modifier for the preparation of a mixed composition of a resin such as a polyphenylene ether or a polycarbonate, i.e., a resin called an engineering plastic and an olefin resin, or as a modifier for improving impact resistance and workability of the engineering plastic, a styrene grafted polyolefin or a styrene polymer is often used (JP—A—7448/1983, 98359/1983 and 141240/1983), but the miscibility between the engineering plastic and the olefin polymer is essentially poor, which fact still presents a great problem. Therefore, the solution of this problem is still strongly desired.

## Summary of the Invention

In view of the above-mentioned situation, the present invention has now been achieved as a result of intensive researches, and its object is to provide novel ethylene copolymers capable of effectively improving the performance necessary for electrical insulating materials, foamed materials and polymers, without involving conventional problems.

## Brief Description of the Drawings

Figs. 1 and 2 show infrared spectra of ethylene copolymers which have been prepared in Examples 2 and 6 of the present invention.

## Detailed Description of the Invention

The present invention is directed to an ethylene copolymer comprising 85.0 to 99.995 mol% of ethylene units, 0.005 to 5 mol% of comonomer units represented by the formula (I)

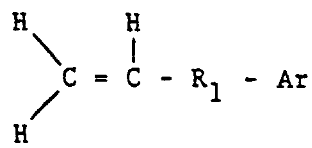

(I)

wherein Ar is

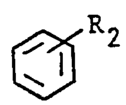 or 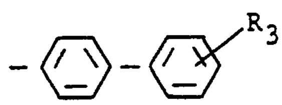,

$R_1$ is an alkylene group having 1 or 2 carbon atoms, each of $R_2$ and $R_3$ is a hydrogen atom, a chlorine atom or a straight-chain or a branched alkyl group having 1 to 4 carbon atoms, and 0 to 10 mol% of units of an ethylenically unsaturated monomer the ethylene copolymer having a density measured in accordance with JIS K 6760 of 0.860 to 0.970 g/cm$^3$ and a melt index measured in accordance with JIS K 6760 of 0.05 to 100 g/10 minutes.

The comonomer represented by the formula (I) is at least one selected from the group consisting of allylbenzene, allyltoluene, allylethylbenzene, allylcumene, allyl-sec-butylbenzene, allylbiphenyl, allyl-methylbiphenyl, allylethylbiphenyl, allyl-iso-propylbiphenyl, allyl-sec-butylbiphenyl, 4-phenylbutene-1, 4-tolylbutene-1, 4-ethylphenylbutene-1, 4-cumylbutene-1, 4-sec-butylphenylbutene-1, 4-(3-butenyl)-biphenyl and chloroallylbenzene. Above all, allylbenzene, allylbiphenyl and 4-phenylbutene-1 are particularly preferred.

The content of the above-mentioned comonomer in the copolymer is within the range of 0.005 to 5 mol%, preferably 0.01 to 2 mol% in terms of the comonomer unit.

When the content of the comonomer is less than 0.005 mol%, modification effects of the ethylene copolymer will scarcely be perceived; when it is in excess of 5 mol%, the copolymer will be economically expensive and the consumption of radicals will be great particularly in a high-pressure radical polymerisation, so that the merit of industrially manufacturing it will be lost.

The ethylenically unsaturated monomer used in the present invention is at least one selected from the group consisting of olefins having 3 to 10 carbon atoms such as propylene, butene-1, hexene-1, 4-methylpentene-1, octene-1 and decene-1, styrene; vinyl esters of alkane carboxylic acids having 2 and 3 carbon atoms; acrylic and methacrylic esters such as methyl acrylate, methyl methacrylate, ethyl acrylate, ethyl methacrylate, propyl acrylate, propyl methacrylate, glycidyl acrylate and glycidyl methacrylate; ethylenically unsaturated carboxylic acids and their anhydrides such as acrylic acid, methacrylic acid, maleic acid, fumaric acid and maleic anhydride; and ethylenically unsaturated carboxylic acid amides such as acrylic acid amide, methacrylic acid amide, maleic acid amide and fumaric acid amide.

A content of the above ethylenically unsaturated monomer used in the present invention is within the range of 0 to 10 mol%, preferably 0 to 7 mol%, more preferably 0 to 5 mol%.

The ethylene copolymer of the present invention can be manufactured by known methods such as an ionic polymerization employing a Ziegler catalyst and a radical polymerization under a high pressure, but in the case that the copolymer for electrical insulating materials is manufactured, the radical polymerization is preferable because the amount of catalyst residue is reduced.

The Ziegler catalyst used in the ionic polymerization is a solid catalyst containing magnesium and titanium, and such a catalyst can be prepared by applying a titanium compound on an inorganic solid carrier compound containing magnesium in a known manner and then combining it with an organic aluminium compound. Examples of the aforesaid inorganic solid compounds include metallic magnesium, magnesium hydroxide, magnesium carbonate, magnesium oxide; double salts, double oxides, carbonates, chlorides and hydroxides each containing a magnesium atom and a metal selected from silicon, aluminum and calcium; and compounds obtained by treating or reacting these inorganic solid compounds with oxygen-containing compounds, sulfur-containing compounds, aromatic hydrocarbons and halogen-containing compounds. The above-mentioned ionic polymerization can be carried out in the presence of such a Ziegler catalyst as mentioned, like a usual olefin polymerization.

This polymerization reaction is accomplished in an essentially oxygen-free and water-free state in a gaseous phase in the presence of an inactive solvent, and if necessary, by utilizing the monomer itself as a solvent. With regard to polymerization conditions for the olefin, the temperature is from 20 to 300°C, preferably 40 to 200°C, and the pressure is from ordinary pressure to 69.6 bar (70 $kg/cm^2 \cdot g$), preferably 2.9 to 59.8 bar (2 to 60 $kg/cm^2 \cdot g$). The adjustment of the molecular weight can be carried out to some extent by changing polymerization conditions such as the polymerization temperature and a molar ratio of a used catalyst but can be effectively accomplished by adding hydrogen to the polymerization system. Further, there can be carried out, without any problem, a multi-stage polymerization reaction comprising two or more stages in which polymerization conditions such as hydrogen concentrations and polymerization temperatures are different.

On the other hand, the above-mentioned radical polymerization under a high pressure means a method of catalytically polymerizing the monomers at once or stepwise under conditions of a polymerization pressure of 491 to 3,924 bar (500 to 4,000 $kg/cm^2$), preferably 981 to 3,434 bar (1,000 to 3,500 $kg/cm^2$) and a reaction temperature of 50 to 400°C, preferably 100 to 350°C in the presence of a free-radical catalyst, a chain transfer agent, and if necessary, an auxiliary in an autoclave or a tube type reactor.

Examples of the above-mentioned free-radical catalysts include usual initiators such as peroxides, hydroperoxides, azo compounds, amine oxides and oxygen.

Further, examples of the chain transfer agents include hydrogen, propylene, butene-1; saturated aliphatic hydrocarbons and halogen-substituted hydrocarbons having 1 to 20 carbon atoms or more such as methane; ethane, propane, butane, isobutane, n-hexane, n-heptane, cycloparaffins, chloroform and carbon tetrachloride; saturated aliphatic alcohols having 1 to 20 carbon atoms or more such as methanol, ethanol, propanol and isopropanol; saturated aliphatic carbonyl compounds such as carbon dioxide, acetone and methyl ethyl ketone; and aromatic compounds such as toluene, diethylbenzene and xylene.

In the ethylene copolymer for electrically insulating materials manufactured by the high-pressure radical polymerization method, the tree phenomenon occurs in a lower degree than in case of the ionic polymerization, the tree phenomenon being caused by the contamination of foreign matters such as catalyst residues. Therefore, the thus prepared copolymer can have remarkably improved insulating power.

The ethylene copolymer of the present invention also is excellent as a foamed material and also as a modifier for a polymer, but as long as the properties of the ethylene copolymer are not impaired remarkably, the copolymer may be mixed for various uses, with at least one thermoplastic resin such as olefin polymers (inclusive of copolymers) other than the ethylene copolymers of the present invention, polyacrylonitriles, polyamides, polycarbonates, ABS resins, polystyrenes, polyphenylene oxides, polyvinyl alcohol resins, vinyl chloride resins, vinylidene chloride resins and polyester resins; thermosetting resins such as petroleum resins, coumarone-indene resins, phenolic resins and melamine resins; and synthetic and natural rubbers such as ethylene-propylene copolymer rubbers (EPR, EPDM and the like), SBR, NBR, butadiene rubbers, IIR, chloroprene rubbers, isoprene rubbers and styrene-butadiene-styrene block copolymers.

In the present invention, there may be used, without any problem, an organic or an inorganic filler, an antioxidant, a lubricant, an organic or an inorganic pigment, an ultraviolet screening agent, an antistatic agent, a dispersant, a copper de-activator, a neutralizing agent, a foaming agent, a plasticizer, an antifoaming agent, a flame-retardant, a cross-linking agent, a flow improver, a weld strength improving agent and a nucleating agent.

Examples 1 to 12

In each example, the atmosphere in a 3.8-liter metallic autoclave reactor equipped with a stirrer was sufficiently replaced with nitrogen and ethylene, and a predetermined amount of ethylene, n-hexane, which was a chain transfer agent, and each comonomer were then placed in the reactor. Then, di-tertiary-butyl peroxide as the polymerization initiator was poured thereinto, and the polymerization was carried out at a temperature of 170°C for one hour under polymerization conditions shown in Table 1.

A portion of the resultant polymer was dissolved in heated carbon tetrachloride and then was added to a large amount of acetone in order to precipitate it again. This procedure was repeated several times to purify the polymer, followed by vacuum drying.

Each purified and dried polymer was molded into a sheet having a thickness of about 500 μm by means of hot pressing. The absorbencies based on aromatic rings in the ethylene copolymer of the present invention was confirmed at 1600, 700, 1030, 1790 and 1940 $cm^{-1}$ with the aid of infrared spectra. Figs. 1 and 2 show infrared spectra obtained in Examples 2 and 6. The content of each copolymerized comonomer in the polymer was quantitatively analyzed on the basis of an absorbency at 1600 $cm^{-1}$, and the results are shown in Table 1. Further, the melt index and the density of each produced polymer were measured in acordance with JIS K 6760.

TABLE 1

Polymerization conditions

| Example | Monomers | | | n-Hexane (g) | Ditertiary buty peroxide (mg) | Pressure (kg/cm²) | Pressure (bar) |
|---|---|---|---|---|---|---|---|
| | Ethylene (g) | Comonomer Name | Comonomer (g) | | | | |
| 1 | 1,680 | Allylbenzene | 10 | 260 | 82 | 1,590 | 1,560 |
| 2 | 1,790 | Allylbenzene | 30 | 90 | 320 | 1,610 | 1,580 |
| 3 | 1,690 | Allylbenzene | 100 | 30 | 960 | 1,600 | 1,570 |
| 4 | 1,680 | 4-Phenylbutene-1 | 10 | 260 | 16 | 1,600 | 1,570 |
| 5 | 1,710 | 4-Phenylbutene-1 | 20 | 220 | 25 | 1,570 | 1,540 |
| 6 | 1,700 | 4-Phenylbutene-1 | 30 | 240 | 16 | 1,610 | 1,580 |
| 7 | 1,680 | 4-Phenylbutene-1 | 200 | 70 | 96 | 1,610 | 1,580 |
| 8 | 1,730 | Allylbiphenyl | 10 | 260 | 6 | 1,710 | 1,678 |
| 9 | 1,750 | Allylbiphenyl | 30 | 280 | 49 | 1,780 | 1,746 |
| 10 | 1,680 | Allyltoluene | 10 | 260 | 82 | 1,600 | 1,570 |
| 11 | 1,690 | Allyl-sec-butylbenzene | 10 | 240 | 82 | 1,610 | 1,580 |
| 12 | 1,680 | Chloroallylbenzene | 10 | 260 | 82 | 1,600 | 1,570 |

TABLE 1 (Continued)

Produced polymer

| Example | Yield (g) | Melt index (g/10 min) | Density ($g/cm^3$) | Content of comonomer (mol%) |
|---|---|---|---|---|
| 1 | 130 | 5.0 | 0.929 | 0.08 |
| 2 | 130 | 1.4 | 0.929 | 0.21 |
| 3 | 100 | 6.2 | 0.930 | 0.75 |
| 4 | 240 | 1.6 | 0.929 | 0.07 |
| 5 | 210 | 1.5 | 0.929 | 0.14 |
| 6 | 120 | 9.2 | 0.928 | 0.25 |
| 7 | 110 | 4.3 | 0.930 | 1.6 |
| 8 | 90 | 1.7 | 0.930 | 0.01 |
| 9 | 40 | 9.7 | 0.930 | 0.06 |
| 10 | 110 | 12.9 | 0.929 | 0.05 |
| 11 | 90 | 10.1 | 0,929 | 0,03 |
| 12 | 150 | 8.0 | 0,928 | 0.06 |

Example 13

The same equipments as in Example 1 were used, and 1,680 g of ethylene, 20 g of allylbenzene as a comonomer, 85 g of vinyl acetate as an ethylenically unsaturated monomer and a chain transfer agent (n-hexane) were placed in the reactor. Thereafter, a polymerization initiator (ditertiary butyl peroxide) was further poured thereinto, and polymerization was carried out at a temperature of 170°C at a pressure of 1,570 bar (1,600 $kg/cm^2$) for one hour. The resultant polymer was treated and analyzed in the same manner as in Example 1, and the results are set forth in Table 2.

However, a content of vinyl acetate in the copolymer was quantitatively analyzed by first molding it into a sheet having a thickness of about 30 µm, taking its infrared absorption spectrum, and measuring its content on the basis of an absorbency of the absorption peak at 1,022 $cm^{-1}$.

Example 14

The same equipments as in Example 1 were used, and 1,820 g of ethylene, 20 g of allylbenzene as a comonomer, 30 g of ethyl acrylate as an ethylenic unsaturated monomer and a chain transfer agent (n-hexane) were placed in the reactor. Afterward, a polymerization initiator (di-tertiary-butyl peroxide) was further poured thereinto, and polymerization was carried out at a temperature of 170°C at a pressure of 1,560 bar (1,590 $kg/cm^2$) for one hour. The resultant polymer was treated and analyzed in the same manner as in Example 1, and the results are set forth in Table 2.

However, a content of ethyl acrylate in the copolymer was quantitatively analyzed by first molding it into a sheet having a thickness of about 200 µm, taking its infrared absorption spectrum, and measuring its content on the basis of an absorbency of the absorption peak at 860 $cm^{-1}$.

TABLE 2

Polymerization conditions

| Example | Ethylene (g) | Monomers: Comonomer Name | Comonomer (g) | Ethylenically unsaturated monomer Name | Ethylenically unsaturated monomer (g) | n-Hexane (g) | Ditertiary buty peroxide (mg) |
|---|---|---|---|---|---|---|---|
| 13 | 1,680 | Allylbenzene | 20 | Vinylacetate | 85 | 120 | 204 |
| 14 | 1,820 | Allylbenzene | 20 | Ethylacrylate | 30 | 100 | 204 |

TABLE 2 (Continued)

Produced polymer

| Example | Yield (g) | Melt index (g/10 min) | Density (g/cm$^3$) | Content (mol%): Comonomer | | Content (mol%): Ethylenically unsaturated monomer | |
|---|---|---|---|---|---|---|---|
| 13 | 180 | 3.5 | 0.935 | Allylbenzene | 0.14 | Vinyl acetate | 1.5 |
| 14 | 170 | 9.1 | 0.934 | Allylbenzene | 0.13 | Ethylacrylate | 3.0 |

Moreover, for the copolymers of the present invention prepared in the above-mentioned examples, insulating destructive strength (impulse voltage destructive strength) was measured, and the results are set forth in Table 3. It is apparent from the given results that in the copolymers of the present invention, the insulating destructive strength could be improved remarkably.

This measurement of the insulating destructive strength (breakdown strength) was carried out as follows.

Procedure: As an electrode system, there was used a pair of stationary electrodes in which a stainless steel ball of 12.7 mm (1/2 inch) in diameter was utilized, i.e., the so-called McKeown electrode. The electrode system was entirely dipped into silicone oil and was then placed in a thermostat at a temperature of 80°C. An impulse voltage was applied to between the electrodes and was then raised gradually, and a point of breakage was taken as a value of insulating destructive strength (impulse voltage breakdown strength).

Sample 1: Ethylene-allylbenzene copolymer (sample of Example 1).

Sample 2: Ethylene-allylphenyl copolymer (sample of Example 8).

Sample 3: Ethylene homo polymer (density=0.929 g/cm$^3$, MI=2.4 g/10 min; ethylene alone was polymerized under the same conditions as in Example 1).

TABLE 3

| Sample | Impulse voltage breakdown strength (80°C) (MV/cm) |
|---|---|
| 1 | 4.1 |
| 2 | 4.3 |
| 3 | 3.5 |

## Claims

1. An ethylene copolymer comprising 85.0 to 99.995 mol% of ethylene units, 0.005 to 5 mol% of the units of a comonomer represented by the formula (I)

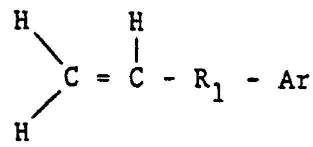

(I)

wherein Ar is

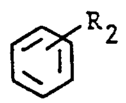 or 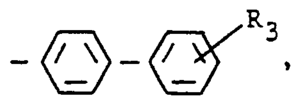 ,

$R_1$ is an alkylene group having 1 or 2 carbon atoms, and each of $R_2$ and $R_3$ is a hydrogen atom, a chlorine atom or a straight-chain or a branched alkyl group having 1 to 4 carbon atoms, and 0 to 10 mol% of the units of an ethylenically unsaturated monomer, said ethylene copolymer having a density measured in accordance with JIS K 6760 of 0.860 to 0.970 g/cm$^2$ and a melt index measured in accordance with JIS K 6760 of 0.05 to 100 g/10 minutes.

2. The ethylene copolymer according to Claim 1 wherein said comonomer represented by said formula (I) is at least one comonomer selected from the group consisting of allylbenzene, allylbiphenyl and 4-phenylbutene-1.

3. The ethylene copolymer according to Claim 1 or 2, wherein said copolymer which has been obtained by a high-pressure radical polymerization at a pressure of 491 to 3,924 bar (500 to 4,000 kg/cm$^2$) and at a temperature of 50 to 400°C.

## Patentansprüche

1. Ethylen-Copolymeres, enthaltend 85,0 bis 99,995 Mol.-% Ethyleneinheiten, 0,005 bis 5 Mol.-% der Einheiten eines durch die Formel (I) dargestellten Comonomeren

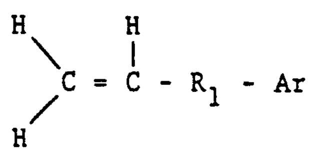

(I)

worin Ar

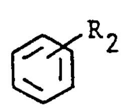 oder 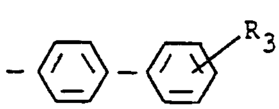

ist, $R_1$ eine Alkylengruppe mit 1 oder 2 Kohlenstoffatomen bedeutet und jeder der Reste $R_2$ und $R_3$ ein Wasserstoffatom, ein Chloratom oder eine geradekettige oder verzweigte Alkylgruppe mit 1 bis 4 Kohlenstoffatomen ist, und 0 bis 10 mol.-% der Einheiten eines ethylenisch ungesättigten Monomeren,

wobei das Ethylen-Copolymere eine gemäß JIS K 6760 gemessene Dichte von 0,860 bis 0,970 g/cm$^3$ und einen gemäß JIS K 6760 gemessenen Schmelzindex von 0,05 bis 100 g/10 min aufweist.

2. Ethylen-Copolymeres nach Anspruch 1, wobei das durch die Formel (I) dargestellte Comonomere mindestens ein aus der Gruppe Allylbenzol, Allylbiphenyl und 4-Phenylbuten-1 ausgewähltes Comonomeres ist.

3. Ethylen-Copolymeres nach Anspruch 1 oder 2, wobei das Copolymere ein durch radikalische Hochdruckpolymerisation unter einem Druck von 491 bis 3924 bar (500 bis 4000 kg/cm$^2$) und bei einer Temperatur von 50 bis 400°C erhaltenes Copolymeres ist.

**Revendications**

1. Copolymère d'éthylène comprenant de 85,0 à 99,995% molaire d/unités éthylène, et 0,005 à 5% molaire d'unités d'un comonomère représenté par la formule (I)

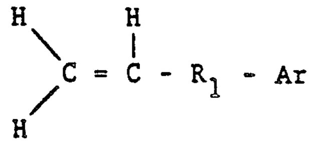

(I)

où Ar représente

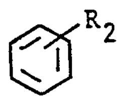 ou 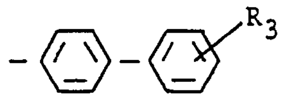 ,

$R^1$ est un groupe alcoylène ayant 1 ou 2 atomes de carbone, et chacun des radicaux $R_2$ et $R_3$ est un atome d'hydrogène, un atome de chlore ou un groupe alcoyle à chaîne droite ou ramifiée ayant de 1 à 4 atomes de carbone,

et de 0 à 10% molaire des unités d'un monomère éthyléniquement non saturé, ledit copolymère d'éthylène ayant une densité mesurée selon JIS K 6760 de 0,860 à 0,970 g/cm$^3$ et un indice de fusion mesuré selon JIS K 6760 de 0,05 à 100 g/10 minutes.

2. Copolymère d'éthylène selon la revendication 1 où ledit comonomère représenté par ladite formule (I) est au moins un comonomère choisi dans le groupe constitué par allyl-benzène, allylbiphényle et 4-phénylbutène-1.

3. Copolymère d'éthylène selon la revendication 1 ou 2, où ledit copolymère est un copolymère qui a été obtenu par une polymérisation radicalaire haute pression à une pression de 491 à 3924 bars (500 à 4000 kg/cm$^2$) et à une température de 50 à 400°C.

F I G. 1

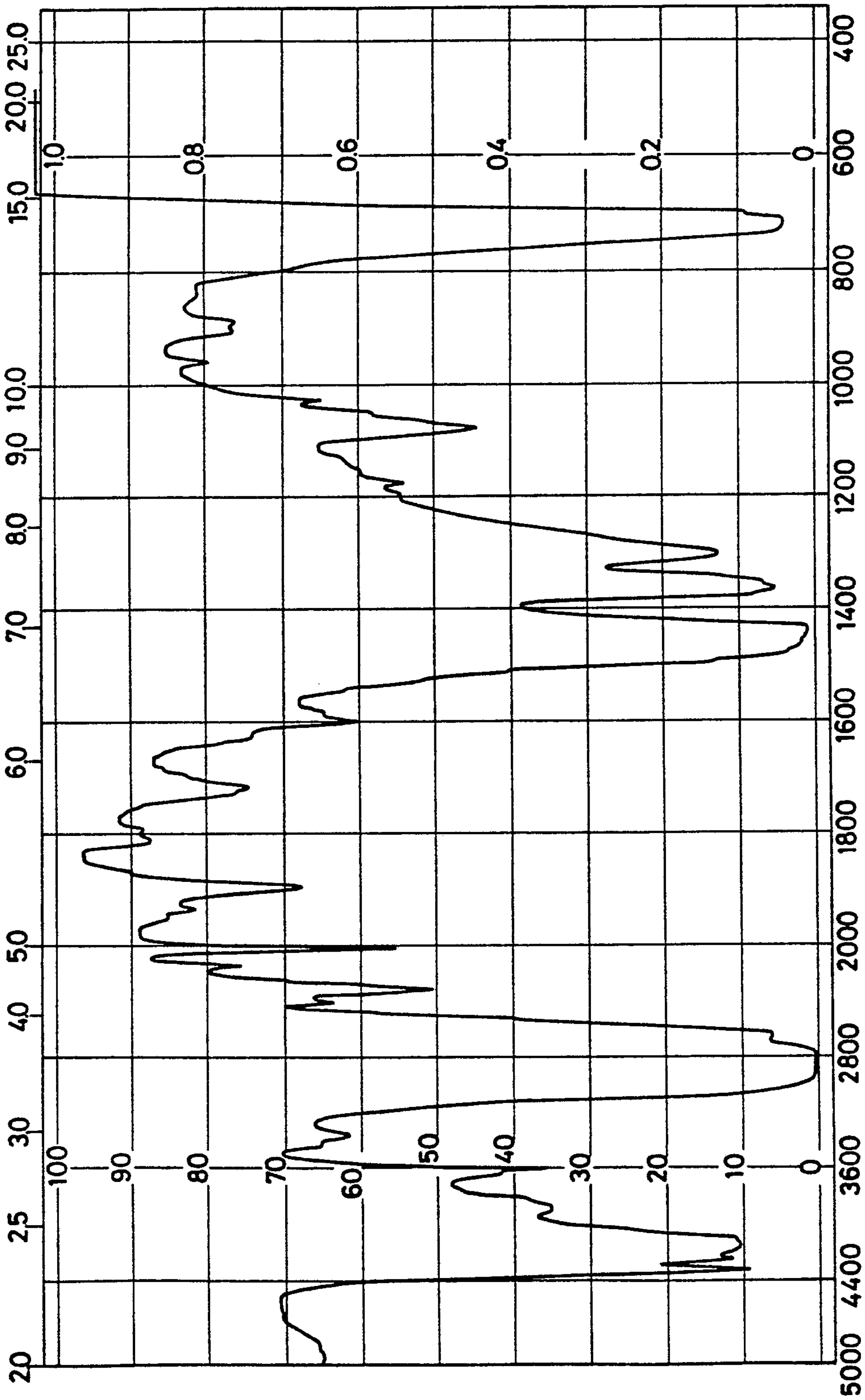
2.0
2.5
3.0
4.0
5.0
6.0
7.0
8.0
9.0
10.0
15.0
20.0
25.0
100
90
80
70
60
50
40
30
20
10
0
1.0
0.8
0.6
0.4
0.2
0
5000
4400
3600
2800
2000
1800
1600
1400
1200
1000
800
600
400

FIG. 2

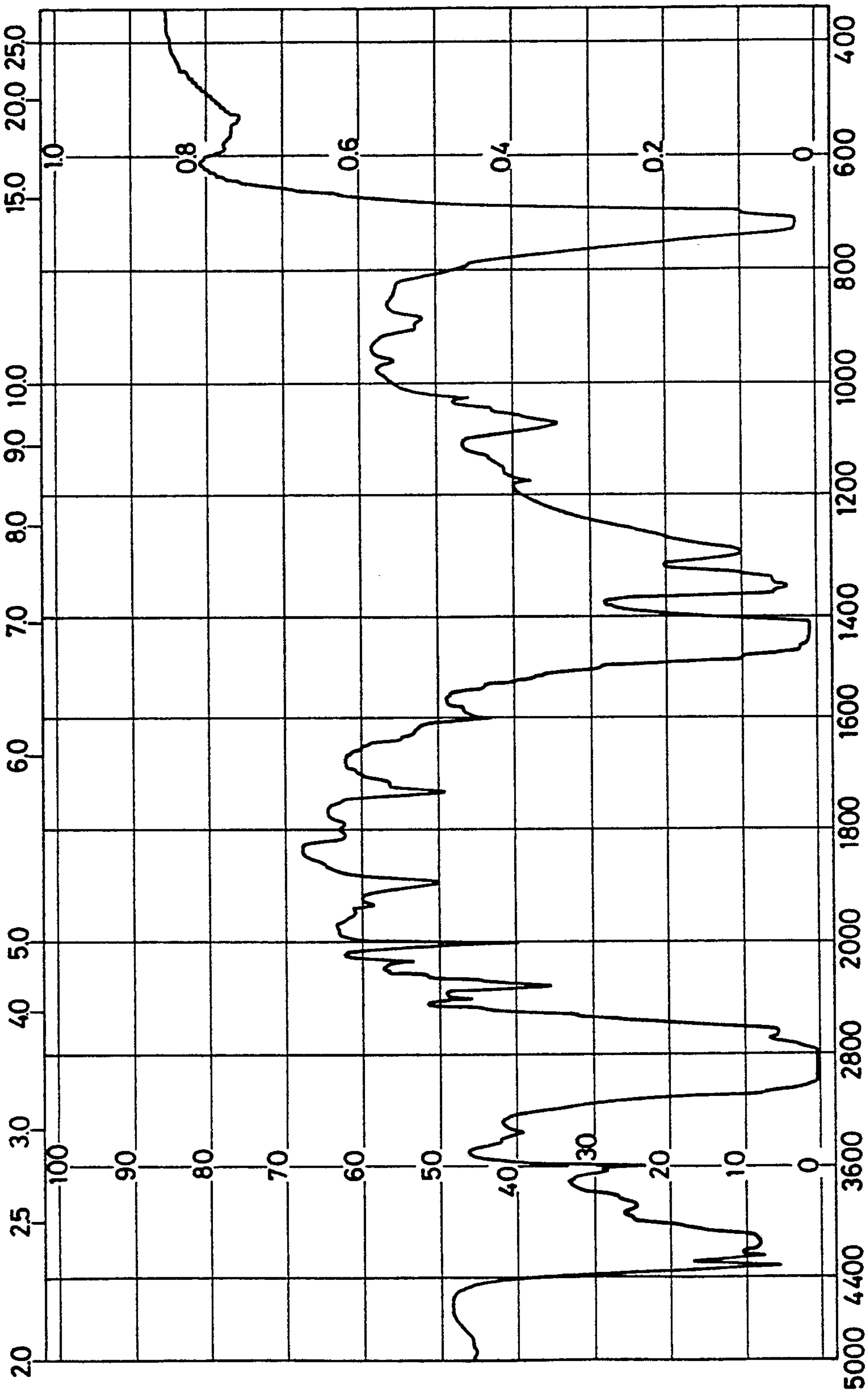
2.0
2.5
3.0
4.0
5.0
6.0
7.0
8.0
9.0
10.0
15.0
20.0
25.0
100
90
80
70
60
50
40
30
20
10
0
1.0
0.8
0.6
0.4
0.2
0
5000
4400
3600
2800
2000
1800
1600
1400
1200
1000
800
600
400